# EUROPEAN PATENT SPECIFICATION

(11) **EP 3 496 550 B1**
(45) Date of publication and mention of the grant of the patent: **13.11.2019**
(21) Application number: 17754644.7
(22) Date of filing: 02.08.2017
(51) Int. Cl.: A23F 3/06

(54) **A PROCESS FOR MANUFACTURING A LEAF TEA PRODUCT**
VERFAHREN ZUR HERSTELLUNG EINES BLATTTEEPRODUKTS
PROCÉDÉ DE FABRICATION D'UN PRODUIT À BASE DE THÉ EN FEUILLES

(30) Priority: 15.08.2016 EP 16184172
(43) Date of publication of application: 19.06.2019
(73) Proprietor: Unilever PLC, London, Greater London EC4Y 0DY (GB); Unilever N.V., 3013 AL Rotterdam (NL)
(72) Inventor: GUTTAPADU, Sreeramulu, Bangalore 560 066 Karanataka (IN); GOVINDASWAMY, Vadivel, Bangalore 560 066 Karanataka (IN); SINGH, Gurmeet, Bangalore 560 066 Karanataka (IN)
(74) Representative: Warner, Guy Jonathan
(86) International application number: PCT/EP2017/069560
(87) International publication number: WO 2018/033393

(56) References cited:
- WO-A1-2005/067727
- WO-A1-2008/107296
- WO-A1-2014/206883

## Description

### Field of the invention

The present invention relates to leaf tea. More particularly it relates to post-auction processing of leaf tea.

### Background of the invention

Beverages based on the tea plant (*Camellia sinensis*) have been popular throughout the world for many hundreds of years. Tea beverages are traditionally made by infusing the dry leaves of the plant *Camellia sinensis* in boiling water.

Most of the tea consumed in the Western world is so-called black tea, which is obtained by harvesting leaves of the plant *Camellia sinensis* and withering, rolling, enzymatically oxidising (fermenting), firing and sorting them. Alternatively, the leaves can be processed without the fermentation step to produce what is known as green tea, which is widely consumed in parts of Asia. In another variation, oolong tea is prepared by partial fermentation.

When it is harvested, the tea crop has a high moisture content. To avoid deterioration of the crop during transportation, initial processing of the tea leaves must occur at or very close to the tea plantation. Thus, regardless of type, the properties of leaf tea are constrained to a certain degree by the location of production. Because of this geographical limitation, the crop processed by a given tea factory is usually limited in terms of choice of tea varieties, agronomy and the manufacturing process used, which in turn can have a marked effect on the properties (e.g. aroma, flavour, *etc*.) and hence the quality of the final product.

Leaf tea is usually sold at auction, with the highest quality teas commanding the highest prices. Indeed, there is a substantial price difference between high quality and low quality tea. Design and control of the manufacturing process is known to influence quality. This has prompted extensive research aimed at optimising manufacturing conditions so as to yield a product with the highest possible quality. However, the post-auction processing of tea has been much less extensively investigated.

The characteristics of the tea from a given tea garden are not constant, and will vary from season to season and according to conditions used to process the tea crop. This means that the range of teas available from auction are not always uniform. There is therefore an unmet need for post-auction processes which allow the properties of the final tea product to be tailored to the customer's requirements.

### Summary of the invention

Tea-based beverages are traditionally produced by infusing tea leaves in hot water and separating the infusion liquor from the spent tea material. Consumers in regions with a tradition of black tea consumption often have a preference for teas with a fast infusion rate and/or a strong liquor colour. Unfortunately, changing the infusion properties to meet this need can have a negative impact on the flavour of the brewed beverage - particularly in terms of increased bitterness.

The present inventors have found that post-auction processing of black tea under certain thermal conditions yields a black leaf tea product which can deliver a darker/redder infusion liquor, without impacting the flavour of the brewed beverage in a negative manner.

Thus in a first aspect, the present invention relates to a process for manufacturing a black tea product, the process comprising the step of heating a black leaf tea starting material having a moisture content of less than 10 wt.% at a temperature of 55°C to 90°C for a duration of at least 20 hours.

The end product of the process of this process is a black leaf tea product which has different properties to the starting material. Thus in a second aspect, the present invention relates to a black leaf tea product obtainable by the process of the first aspect of the invention.

### Detailed description of the invention

For the purpose of the present invention, "tea" means material from *Camellia sinensis* var. *sinensis* and/or *Camellia sinensis* var. *assamica.* The term "leaf tea" refers to leaf and/or stem material from the tea plant in an uninfused form (i.e. material which has not been subjected to a solvent extraction step). Leaf tea is dried to a moisture content of less than 10 wt.%, and the moisture content of the leaf tea will not usually be below 0.1 wt.%. Typically the leaf tea has a moisture content of 1 to 5 wt.%. In other words, the term "leaf tea" refers to the end product of tea manufacture (sometimes referred to as "made tea").

"Fresh tea leaves" refers to tea leaves, buds and/or stem that have never been dried to a water content of less than 30 wt.%, and usually have a water content of 60 to 90 wt.%.

As used herein, the term "black tea" refers to substantially fermented tea, wherein "fermentation" refers to the oxidative and hydrolytic process that tea undergoes when certain endogenous enzymes and substrates are brought together. During the so-called fermentation process, colourless catechins in the leaves and/or stem are converted to a complex mixture of yellow/orange to dark brown polyphenolic substances. For example, black leaf tea can be manufactured from fresh tea material by the steps of: withering, maceration, fermentation and drying. A more detailed description of the production of black tea can be found in Chapter 14 of "Tea: Cultivation to consumption" (edited by K.C. Wilson & M.N. Clifford, published in 1992).

The starting material for the process of the present invention is black leaf tea. Black leaf tea is a readily available commercial product which can be purchased in bulk at tea auctions. In other words, the term "black leaf tea" refers to the end product of black tea manufacture (sometimes referred to as "made tea"). The black leaf tea provided as the starting material for the claimed process has a moisture content of less than 10 wt.%, preferably less than 6 wt.%, more preferably less than 5 wt.%. The moisture content of this black leaf tea is usually at least 0.1 wt.%, more usually at least 0.5 wt.%. Typically the black leaf tea will have a moisture content of 1 to 5 wt.%.

The end product of the process of the present invention is a black leaf tea product. This black leaf tea product is manufactured by subjecting the black leaf tea starting material to certain thermal conditions by way of a heat treatment step. Processing the black leaf tea in this way produces a black leaf tea product which has different properties to the starting material.

The present inventors have found that a prolonged heat treatment step at a moderate temperature can change the properties of the black leaf tea starting material. As such, the process of the present invention comprises a heat treatment step that is carried out at a temperature of 55°C to 90°C for a duration of at least 20 hours.

The temperature of the heat treatment step needs to be sufficient to produce a black leaf tea product which has different properties to the starting material. Without wishing to be bound by theory, the inventors believe that temperatures below a certain threshold do not elicit appropriate changes in the starting material. Therefore the black leaf tea starting material is heated to a temperature of at least 55°C, preferably at least 60°C, more preferably at least 65°C.

Prolonged heating at high temperatures is believed to cause over-drying of the black leaf tea material, which may increase the friability of the final leaf tea product. Therefore, the black leaf tea starting material is heated to a temperature which does not exceed 90°C. Preferably the temperature does not exceed 85°C, more preferably the temperature does not exceed 80°C, and most preferably the temperature does not exceed 75°C.

The duration of the heat treatment step is at least 20 hours, preferably at least 24 hours, more preferably at least 36 hours, and most preferably at least 48 hours.

Although there is no particular upper limit to the duration of the heat treatment step, in the interest of process efficiency it is preferred to limit the duration to a certain extent. Thus, the duration of the heat treatment is preferably no longer than 100 hours, more preferably no longer than 84 hours, still more preferably no more than 76 hours.

Since the process of the present invention is a post-auction process, it is does not need to be carried out in the proximity of a tea plantation. Indeed, whilst the starting material for the process is likely to be a black leaf tea product from a single tea garden, the process is not limited in this way. Thus a further advantage of the process is that the starting material can be a tea blend (i.e. the black leaf tea having a moisture content of less than 10 wt.% can be a tea blend).

As used herein, the term "tea blend" refers to a mixture of two or more different black leaf teas. In the tea industry, the final packaged tea product sold to the consumer is commonly produced by blending different leaf teas together. Leaf teas for a blend are typically selected according to a number of different attributes, e.g. their quality, flavour, strength, body, size of leaf and price. Tea blending is a post-auction process, and allows teas of different origins to be combined to meet consumer preferences.

Additionally or alternatively, the black leaf tea product obtainable by the process of the present invention can be used as a component of a tea blend. In other words, the black leaf tea product is preferably blended with one or more black leaf tea. It is envisaged that the tea blend may comprise both the black leaf tea starting material and the black leaf tea product.

The present inventors have found that the black leaf tea product obtainable by the process has different attributes to the black leaf tea starting material, particularly regarding the properties of the infusion liquor produced on brewing.

As used herein the term "comprising" encompasses the terms "consisting essentially of" and "consisting of". All percentages and ratios contained herein are calculated by weight unless otherwise indicated. It should be noted that in specifying any range of values or amounts, any particular upper value or amount can be associated with any particular lower value or amount. Except in the operative and comparative examples, all numbers in the description indicating amounts of materials, conditions of reaction, physical properties of materials, and/or use are to be understood as being preceded by the word "about". The various features of the embodiments of the present invention referred to in individual sections above apply, as appropriate, to other sections *mutatis mutandis.* Consequently features specified in one section may be combined with features specified in other sections as appropriate. The disclosure of the invention as found herein is to be considered to cover all embodiments as found in the claims as being multiply dependent upon each other. Unless defined otherwise, all technical and scientific terms used herein have the same meaning as commonly understood by one of ordinary skill in the art in the field of tea processing.

The present invention will now be illustrated by reference to the following non-limiting examples.

### Examples

### Example 1

A black leaf tea was prepared using leaf tea from a South Indian tea plantation according to standard manufacturing conditions. Briefly, the fresh tea leaves were withered for 18 hours, macerated by CTC, fermented for 90 minutes, and dried to obtain the black leaf tea. Portions of this black leaf tea starting material were subjected to a heat treatment step by placing the tea in an oven (HTA Instrumentation Pvt. Ltd., Bangalore) at 70°C for the durations indicated in Table 1. A portion of the starting material was set aside for use as a control sample (Control A); this portion was not subjected to any kind of thermal treatment.

Infusions were prepared from each of the thermally treated samples and the control sample. Each infusion was made by infusing 2 g of leaf tea in 200 ml of freshly boiled water for 2 minutes without stirring. The L*a*b* values of the resulting infusions were determined using colourimetry (Hunter LAB colourimeter, UltraScan VIS1437).

Samples 1 to 3 were produced by keeping the temperature constant (70°C) and varying the duration of the heat treatment step. The data in Table 1 shows the results of the colour analysis using the CIE L*a*b* colour space for infusions resulting from brewing these samples according to the brewing protocol set out above.

**Table 1**

| **Sample** | **Temperature (°C)** | **Duration (hours)** | **Infusion** | | |
|---|---|---|---|---|---|
| | | | **L*** | **a*** | **b*** |
| **Control A** | - | - | 73.63 | 16.91 | 84.44 |
| **1** | 70 | 20 | 72.30 | 18.33 | 84.95 |
| **2** | 70 | 54 | 71.22 | 18.93 | 82.48 |
| **3** | 70 | 70 | 69.84 | 19.43 | 82.21 |

The coordinates L* and a* are of particular interest, since these values relate to the darkness and redness of the infusion liquor. Consumers in regions with a tradition of black tea consumption often have a preference for teas with a strong liquor colour. Lower L* values indicate a darker infusion liquor (whilst higher L* values indicate a lighter/paler infusion liquor). Higher a* values indicate a redder colour (whilst lower a* values indicate a greener colour). Thus, infusions with higher a* values and a lower L* values are of particular interest.

The data in Table 1 shows that there is a trend for both the darkness (L* value) and the redness of the infusion liquor (a* value) to increase as the duration of the heat treatment step increases. Thus thermal treatment can change the infusion performance of black leaf tea in a consumer-relevant direction.

### Example 2

The samples prepared above (i.e. samples 1 to 3 and the control sample) were analysed to determine the content of certain tea compounds. In particular, the levels of epigallocatechin gallate (EGCG), gallic acid (GA), caffeine, and theobromine were measured. The samples for analysis were prepared using the standard ISO method (ISO 14502-1) and the amount of catechins in these samples was determined according to the standard ISO method (ISO 14502-2). The results are presented in Table 2.

**Table 2**

| **Tea compound (mg/g)** | **Sample** | | | |
|---|---|---|---|---|
| | **Control** | **1** | **2** | **3** |
| Caffeine | 37.10 | 35.81 | 36.11 | 36.93 |
| ECG | 1.11 | 1.07 | 1.18 | 1.12 |
| EGCG | 3.72 | 3.39 | 3.05 | 3.12 |
| Gallic acid | 3.39 | 3.48 | 3.88 | 4.06 |
| Theobromine | 1.81 | 1.74 | 1.74 | 1.80 |

The data in Table 2 shows that the levels of catechins and caffeine tend to decrease as the duration of the heat treatment step increases. There is also a slight decrease in the level of theobromine. In contrast, the level of gallic acid tends to increase.

Caffeine, gallated catechins (such as ECG and EGCG), and theobromine are known to have a bitter taste. A reduction in the level of these molecules is expected to reduce the bitterness of the tea liquor. Thus the process of the present invention can increase the infusion performance of leaf tea, whilst at the same time delivering a tea beverage which does not suffer from the drawback of increased bitterness.

### Example 3

A black leaf tea was prepared using leaf tea from a South Indian tea plantation according to standard manufacturing conditions. Briefly, the fresh tea leaves were withered for 18 hours, macerated by CTC, fermented for 90 minutes, and dried to obtain the black leaf tea. A portion of this material was subjected to a heat treatment step by placing the tea in an oven (HTA Instrumentation Pvt. Ltd., Bangalore) at 70°C for 48 hours (Sample 4). A portion of the starting material was set aside for use as a control sample (Control B). The control sample was not subjected to any kind of thermal treatment.

A black leaf tea prepared by a process comprising an anaerobic treatment step was used as an alternative starting material. Briefly, fresh tea leaves from a South Indian tea plantation were incubated in an air-tight environment for 24 hours (18 to 30 kg of leaves sealed in 50 L food-grade HDPE drums), then , macerated by CTC, fermented for 90 minutes, and dried to obtain the black leaf tea. A portion of this material was subjected to a heat treatment step by placing the tea in an oven (HTA Instrumentation Pvt. Ltd., Bangalore) at 70°C for 48 hours (Sample 5), and a portion of this material was set aside for use as a control sample (Control C). The control sample was not subjected to any kind of thermal treatment.

Infusions were prepared from each of the thermally treated samples and the control samples. Each infusion was made by infusing 2 g of leaf tea in 200 ml of freshly boiled water for 2 minutes without stirring. The L*a*b* values of the resulting infusions were determined in the same manner described in Example 1. The data in Table 3 shows the results of the colour analysis using the CIE L*a*b* colour space for these samples.

**Table 3**

| **Sample** | **Anaerobic withering?** | **Temperature (°C)** | **Duration (hours)** | **Infusion** | | |
|---|---|---|---|---|---|---|
| | | | | **L*** | **a*** | **b*** |
| **Control B** | No | - | - | 73.63 | 16.91 | 84.44 |
| **4** | No | 70 | 48 | 71.00 | 18.59 | 83.21 |
| **Control C** | Yes | - | - | 70.00 | 21.98 | 81.17 |
| **5** | Yes | 70 | 48 | 68.12 | 23.12 | 79.03 |

Once again, the coordinates L* (darkness) and a* (redness) are of particular interest.

The data in Table 3 shows that thermal treatment increases both the darkness (lower L* value) and the redness (higher a* value) of the infusion liquor compared to the relevant control sample. The data indicate that sample 5 had the darkest/reddest liquor of these samples.

Sensory assessment of the infusions was carried out. Once again, infusions were made by brewing 2 g of leaf tea in 200 ml of freshly boiled water. Sensory scores were obtained by serving 20 ml portions of the infusions to pre-trained sensory panellists (14 member panel) for assessment. The average sensory scores on a scale of 1 to 10 for different visual and in-mouth sensory attributes are presented in Table 4.

**Table 4**

| **Sensory property** | **Sample** | | | |
|---|---|---|---|---|
| | **Control B** | **4** | **Control C** | **5** |
| Redness | 6.18 | 6.34 | 6.48 | 7.12 |
| Darkness | 5.78 | 6.21 | 64.7 | 7.31 |
| Bitterness | 5.01 | 3.28 | 6.70 | 5.26 |
| Astringency | 4.72 | 4.68 | 6.01 | 6.08 |

The data show that Control C (anaerobic withering) is perceived as being more bitter/astringent than Control B (standard black tea). Thus, although leaf tea manufactured via a process comprising anaerobic withering produces an infusion liquor which is judged to be darker/redder than standard leaf tea, this effect is accompanied by a change in the flavour attributes which are not necessarily preferred by consumers. Thermal processing according to the present invention can mitigate the impact that anaerobic withering has on the flavour of the infusion whilst still improving the appearance of the liquor in terms of darkness/redness.

## Claims

1. A process for manufacturing a black tea product, the process comprising the step of heating a black leaf tea starting material having a moisture content of less than 10 wt.% at a temperature of 55°C to 90°C for at least 20 hours.

2. A process as claimed in claim 1 wherein the moisture content of the black leaf tea starting material is less than 5 wt.%.

3. A process as claimed in claim 1 or claim 2 wherein the temperature is from 60°C to 80°C.

4. A process as claimed in any one of claims 1 to 3 wherein the black leaf tea starting material is heated for a duration of 24 to 100 hours.

5. A process as claimed in claim 1 wherein the black leaf tea starting material is heated for a duration of 36 to 84 hours.

6. A process as claimed in any one of claims 1 to 5 wherein the black leaf tea starting material is a tea blend.

7. A process as claimed in any one of claims 1 to 6 wherein wherein the black leaf tea starting material is manufactured by a process comprising the step of incubating fresh tea leaves at a temperature of 4°C to 60°C under anaerobic conditions for 4 to 36 hours.

8. A process as claimed in claim 7 wherein the anaerobic conditions are achieved by placing the fresh tea leaf in a container, optionally purging oxygen from the container by passing a gas with an oxygen content of less than 3% by volume through the container, and then closing the container.

## Patentansprüche

1. Verfahren zur Herstellung eines Schwarzteeproduktes, wobei das Verfahren den Schritt des Erhitzens eines Schwarzblatttee-Ausgangsmaterials eines Feuchtigkeitsgehalts von weniger als 10 Gew.-% bei einer Temperatur von 55°C bis 90°C für mindestens 20 Stunden umfasst.

2. Verfahren, wie im Anspruch 1 beansprucht, wobei der Feuchtigkeitsgehalt des Schwarzblatttee-Ausgangsmaterials weniger als 5 Gew.-% beträgt.

3. Verfahren, wie im Anspruch 1 oder Anspruch 2 beansprucht, wobei die Temperatur von 60°C bis 80°C beträgt.

4. Verfahren, wie in irgendeinem der Ansprüche 1 bis 3 beansprucht, wobei das Schwarzblatttee-Ausgangsmaterial für eine Dauer von 24 bis 100 Stunden erhitzt wird.

5. Verfahren, wie im Anspruch 1 beansprucht, wobei das Schwarzblatttee-Ausgangsmaterial für eine Dauer von 36 bis 84 Stunden erhitzt wird.

6. Verfahren, wie in irgendeinem der Ansprüche 1 bis 5 beansprucht, wobei das Schwarzblatttee-Ausgangsmaterial eine Teemischung ist.

7. Verfahren, wie in irgendeinem der Ansprüche 1 bis 6 beansprucht, wobei das Schwarzblatttee-Ausgangsmaterial durch ein Verfahren hergestellt wird, das den Schritt des Inkubierens frischer Teeblätter unter anaeroben Bedingungen bei einer Temperatur von 4°C bis 60°C für 4 bis 36 Stunden umfasst.

8. Verfahren, wie im Anspruch 7 beansprucht, wobei die anaeroben Bedingungen dadurch erreicht werden, indem frisches Teeblatt in einen Behälter gegeben wird, wobei gegebenenfalls Sauerstoff aus dem Behälter gespült wird, indem ein Gas mit einem Sauerstoffgehalt von weniger als 3 Volumen-% durch den Behälter geleitet und dann der Behälter geschlossen wird.

## Revendications

1. Procédé de fabrication d'un produit de thé noir, le procédé comprenant l'étape de chauffage d'une matière première de thé noir en feuilles présentant une teneur en humidité inférieure à 10 % en masse à une température de 55°C à 90°C pendant au moins 20 heures.

2. Procédé selon la revendication 1, dans lequel la teneur en humidité de la matière première de thé noir en feuilles est inférieure à 5 % en masse.

3. Procédé selon la revendication 1 ou la revendication 2, dans lequel la température est de 60°C à 80°C.

4. Procédé selon l'une quelconque des revendications 1 à 3, dans lequel la matière première de thé noir en feuilles est chauffée pendant une durée de 24 à 100 heures.

5. Procédé selon la revendication 1, dans lequel la matière première de thé noir en feuilles est chauffée pendant une durée de 36 à 84 heures.

6. Procédé selon l'une quelconque des revendications 1 à 5, dans lequel la matière première de thé noir en feuilles est un mélange de thés.

7. Procédé selon l'une quelconque des revendications 1 à 6, dans lequel la matière première de thé noir en feuilles est fabriquée par un procédé comprenant l'étape d'incubation de feuilles de thé fraîches à une température de 4°C à 60°C dans des conditions anaérobies pendant de 4 à 36 heures

8. Procédé selon la revendication 7, dans lequel les conditions anaérobies sont réalisées en plaçant la feuille de thé fraiche dans un récipient, en purgeant éventuellement l'oxygène du récipient en faisant passer un gaz avec une teneur en oxygène inférieure à 3 % en volume à travers le récipient, et en fermant ensuite le récipient.
